# EUROPEAN PATENT APPLICATION

(11) **EP 4 800 580 A1**
(43) Date of publication of application: **02.09.2026**
(21) Application number: 25186606.7
(22) Date of filing: 01.07.2025
(51) Int. Cl.: G06F 21/31, H04L 9/40, G06F 21/34

(54) **AUTHORIZATION METHOD AND SYSTEM AND ELECTRONIC DEVICE USING THE SAME**

(30) Priority: 26.02.2025 CN 202510217245
(71) Applicant: Getac Technology Corporation, New Taipei City 221009 (TW)
(72) Inventor: CHIU, Chia-Chang, 11568 Taipei City (TW)
(74) Representative: Viering, Jentschura & Partner mbB Patent- und Rechtsanwälte

(57) **Abstract**

The authorization method for an electronic device comprises to receive and store a first encrypted password generated by a remote device performing an irreversible operation on a first dynamic password, to receive an input password in response to a power-on command, to perform an irreversible operation on the input password to generate a second encrypted password, and to compare the first encrypted password and the second encrypted password. When the first encrypted password is same as the second encrypted password, the electronic device is started to complete a startup procedure and the remote device updates the first dynamic password to a second dynamic password.

## Description

### BACKGROUND

### Technical Field

The present disclosure relates to an authorization system and method, and more particularly to an authorization method and system for preventing unauthorized access to an electronic device and an electronic device using the authorization method and system.

### Description of Related Art

Before a user accesses an electronic device, the electronic device will perform a verification process to verify the access authority of the user to determine whether the user has the right to access the electronic device. Typically, the user may input the verification information, such as the user's username and password, into the electronic device. Then, the electronic device will verify the access authority of the user based on the received verification information. If the user has the access authority, the electronic device allows the user to access the electronic device.

Typically, the electronic device is started up to receive the verification information before executing a verification procedure. However, the storage device in the electronic device will be started up simultaneously during the process for starting the electronic device, which may result in the risk of data stored in the storage device being stolen.

In view of this, the present disclosure provides an authorization system and an authorization method for an electronic device to solve the above problems.

### SUMMARY

The foregoing presents a summary of the disclosure in order to provide the reader a basic understanding. Accordingly, this disclosure provides an authorization method, authorization system, and electronic device using.

One embodiment of the present disclosure is to provide an authorization method for an electronic device, comprising: receiving and storing a first encrypted password generated by a remote device performing an irreversible operation on a first dynamic password; receiving an input password in response to a power-on command for the electronic device; performing the irreversible operation on the input password to generate a second encrypted password; comparing the first encrypted password and the second encrypted password; and when the first encrypted password is same as the second encrypted password, starting the electronic device to complete a startup procedure; and updating the first dynamic password to a second dynamic password by the remote device.

In some embodiments, the authorization method further includes transmitting the input password by the remote device to another electronic device different from the electronic device.

In some embodiments, the authorization method further includes shutting down the electronic device or destroying data stored in the electronic device when the first encrypted password is not the same as the second encrypted password.

In some embodiments, the authorization method further includes, when the first encrypted password is not the same as the second encrypted password, counting a number of the first encrypted password not the same as the second encrypted password, and shutting down the electronic device or destroying the data stored in the electronic device when the number of the first encrypted password not the same as the second encrypted password is greater than a threshold value.

In some embodiments, the authorization method further includes receiving a new input password when the number of the first encrypted password not the same as the second encrypted password is less than the threshold value, and performing the irreversible operation on the new input password to generate a new second encrypted password.

In some embodiments, after starting the electronic device to complete the startup procedure, the authorization method further includes determining whether the electronic device is connected to the remote device, and receiving and storing an updated first encrypted password generated by the remote device when the electronic device is connected to the remote device.

In some embodiments, the updated first encrypted password is generated after the remote device performs the irreversible operation on the second dynamic password.

In some embodiments, the irreversible operation is a hash algorithm.

In some embodiments, the method further includes, in response to the power-on command for the electronic device, delaying the startup procedure of the electronic device.

Another embodiment of the present disclosure is to provide an electronic device authorization system. The electronic device authorization system includes a remote device and a first electronic device. The remote device is used for generating a first dynamic password, and performing an irreversible operation on the first dynamic password to generate a first encrypted password. The first electronic device is communicatively connected to the remote device to receive the first encrypted password. The first electronic device further includes a controller, a memory and an input-output interface. The memory is coupled to the controller to store the first encrypted password. The input-output interface is coupled to the controller and responds to a power-on command for the first electronic device to receive an input password. The controller performs the irreversible operation on the input password to generate a second encrypted password, and compares the second encrypted password with the first encrypted password. When the first encrypted password is same as the second encrypted password, the controller controls the first electronic device to complete a startup procedure.

In some embodiments, the authorization system further includes a second electronic device, and the remote device transmits the input password to the second electronic device.

In some embodiments, the memory is an electrically-erasable programmable read-only memory (EEPROM), which is coupled to the controller via a serial bus.

In some embodiments, the input-output interface is a keyboard.

In some embodiments, when the first encrypted password is not the same as the second encrypted password, the controller shuts down the electronic device or destroys the data stored in the electronic device.

In some embodiments, the irreversible operation is a hash algorithm.

In some embodiments, the controller further delays the startup procedure of the first electronic device in response to the power-on command.

Another embodiment of the present disclosure is to provide an electronic device. The electronic device comprises a controller, a memory and an input-output interface. The memory is coupled to the controller to store a first encrypted password generated by a remote device. The input-output interface is coupled to the controller to responding to a power-on command to receive an input password. The controller performs an irreversible operation on the input password to generate a second encrypted password. The controller compares the second encrypted password with the first encrypted password. When the first encrypted password is same as the second encrypted password, the controller controls the electronic device to complete a startup procedure.

In some embodiments, the irreversible operation is a hash algorithm.

In some embodiments, when the first encrypted password is not the same as the second encrypted password, the controller shuts down the electronic device or destroys the data stored in the electronic device.

In some embodiments, the remote device generates a dynamic password and performs the irreversible operation on the dynamic password to generate the first encrypted password.

The authorization method, authorization system and electronic device of the present application can temporarily delay the startup procedure of the electronic device to execute a verification procedure when receiving a power-on command through a controller in the electronic device. Then, the verification information, such as the password, inputted by the user will be subjected to an irreversible operation to generate an encrypted password. This encrypted password is compared with an encrypted password sent remotely and stored in a memory. When the two encrypted passwords are the same, the electronic device operating system is started to enter the normal boot process. If the two encrypted passwords are not the same, the automatic shutdown procedure is executed or the storage device data is destroyed. Thereby, the security of the electronic device is further enhanced to prevent unauthorized access.

### BRIEF DESCRIPTION OF THE DRAWINGS

The accompanying drawings are included to provide a further understanding of the disclosure, and are incorporated in and constitute a part of this specification. The drawings illustrate embodiments of the disclosure and, together with the description, serve to explain the principles of the disclosure.
FIG. 1 is a schematic diagram of an authorization system for electronic devices according to a preferred embodiment of the present disclosure.
FIG. 2 is a flow chart of an authorization method for an electronic device according to a preferred embodiment of the present disclosure.

### DETAILED DESCRIPTION

To make the contents of the present disclosure more thorough and complete, the following illustrative description is given with regard to the embodiment aspects and embodiments of the present disclosure, which is not intended to limit the scope of the present disclosure. The features of the embodiments and the steps of the method and their sequences that constitute and implement the embodiments are described. However, other embodiments may be used to achieve the same or equivalent functions and step sequences.

Unless otherwise defined herein, scientific and technical terminologies employed in the present disclosure shall have the meanings that are commonly understood and used by one of ordinary skill in the art. Unless otherwise required by context, it will be understood that singular terms shall include plural forms of the same and plural terms shall include the singular. Specifically, as used herein and in the claims, the singular forms "a" and "an" include the plural reference unless the context clearly indicates otherwise.

In a traditional verification procedure, before the electronic device authenticates the authentication data, the electronic device must first be started up to receive the authentication data for authentication. However, during the startup process of the electronic device, the internal storage device will be powered on at the same time, causing the risk of data stored in the storage device being stolen. Therefore, in order to prevent the storage data from being stolen, the present disclosure provides an authorization system and an authorization method to prevent unauthorized access to an electronic device. When a power-on command is received, a controller installed in the electronic device temporarily delays the startup procedure of the electronic device to execute a verification procedure. An irreversible operation is performed on received verification data, such as an input password, to generate an encrypted password that is compared with another encrypted password transmitted from a remote device and stored in a memory. When the two encrypted passwords are the same, the operating system of the electronic device is started to enter the normal boot process. If the two encrypted passwords are not the same, the automatic shutdown procedure is executed or the storage device data is destroyed. Thereby, the security of the electronic device is further enhanced to prevent unauthorized access.

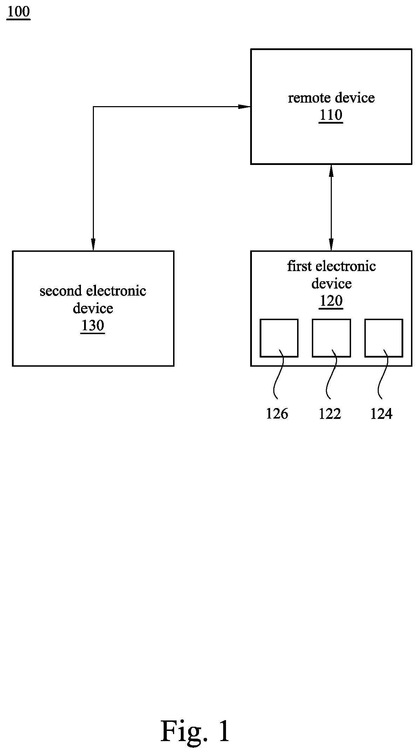

FIG. 1 is a schematic diagram of an authorization system for electronic devices according to a preferred embodiment of the present disclosure. The authorization system 100 includes a remote device 110, a first electronic device 120, and a second electronic device 130. The remote device 110, the first electronic device 120, and the second electronic device 130 are connected together via a communication protocol. In some embodiments, the remote device 110 is used to dynamically generate a first dynamic password and a corresponding input password. The remote device 110 performs an irreversible operation to encrypt the first dynamic password to generate a first encrypted password and transmit the first encrypted password to the first electronic device 120. The first electronic device 120 receives and stores the first encrypted password, so as to determine whether the user has access authority to the first electronic device 120 according to the first encrypted password and an input password inputted by the user in the verification process. In some embodiments, the input password inputted by the user is same as the first dynamic password generated by the remote device 110. The user uses a second electronic device 130 different from the first electronic device 120 to receive the input password generated by the remote device 110. The user inputs the input password to the first electronic device 120 during the verification process. The first electronic device 120 determines whether the user has access authority to the first electronic device 120 based on the input password inputted by the user and the stored first encrypted password.

In some embodiments, the irreversible operation is a hash algorithm. The remote device 110 is a server. The first electronic device 120 and the second electronic device 130 are selected from one of a desktop computer, a notebook computer, a tablet computer and a smart phone. Communication protocols include file transfer protocol (FTP), secure file transfer protocol (SFTP), network file system (NFS), simple mail transfer protocol (SMTP), hypertext transfer protocol secure (HTTPS), and the communication protocol under the Windows net use command. However, the above are only given by way of some embodiments, and the present disclosure is not limited to the above embodiments.

In some embodiments, the authorization system 100 further includes a controller 122, a memory 124, and an input/output interface 126 disposed in the first electronic device 120.

The controller 122 is an embedded controller (EC) or a microcontroller disposed in the first electronic device 120. In some embodiments, the controller 122 is coupled to a power button (not shown) of the first electronic device 120. The controller 122 responds to a power command generated by the user pressing the power button to delay the startup procedure of the first electronic device 120 to make the first electronic device 120 execute the authorization method and enter the authorization process. In this authorization process, only the controller 122, memory 124 and input/output interface 126 are started up to determine whether a user has access authority to the first electronic device 120. Because the main storage element storing sensitive data in the first electronic device 120, such as a hard disk, is not powered on and activated, the security of the first electronic device 120 can be further enhanced to prevent improper access.

The memory 124, such as an electrically-erasable programmable read-only memory (EEPROM) or a flash memory, is coupled to the controller 122 to store the first encrypted password transmitted by the remote device 110. The controller 122 can communicate with the memory 124 via a serial bus, such as an Inter-Integrated Circuit (I2C).

The input/output interface 126, such as a keyboard of the first electronic device 120, is coupled to the controller 122 and can respond to a power-on command to receive an input password inputted by a user. In one embodiment, the input password is same as the first dynamic password dynamically generated by the remote device 110. The user uses the second electronic device 130 different from the first electronic device 120 to receive the input password generated by the remote device 110. The input password is inputted to the first electronic device 120 through the input/output interface 126 in the authentication process of the first electronic device 120. In some embodiments, the input/output interface 126 may include a backlight that flashes to remind the user when the user is required to input the input password or to inform the user when the input password is wrong for verification.

In some embodiments, after the user inputs the input password that is received by the second electronic device 130 from the remote device 110 at the input/output interface 126 of the first electronic device 120, the controller 122 performs an irreversible operation on the input password to generate a second encrypted password. In some embodiments, the irreversible operation is a hash algorithm. This irreversible operation may be same as the irreversible operation used by the remote device 110 to perform an encryption operation on the first dynamic password to generate the first encrypted password. After the controller 122 generates the second encrypted password, the controller 122 can retrieve the first encrypted password sent by the remote device 110 from the memory 124 via the serial bus, and compare the first encrypted password with the second encrypted password to determine whether the two encrypted passwords are the same.

In some embodiments, when the first encrypted password is same as the second encrypted password, which means that the user is an authorized user, the controller 122 controls the first electronic device 120 to complete a startup procedure. That is, the controller 122 starts the startup procedure previously delayed in response to the user's power-on command to complete the startup of the first electronic device 120. Therefore, the user can access the main storage element storing sensitive data, such as a hard disk, in the first electronic device 120.

On the other hand, when the first encrypted password is different from the second encrypted password, which means that the user is not an authorized user, the controller 122 controls the first electronic device 120 to shut down, such as cutting off the power supply of the first electronic device 120, or to directly destroy the main storage element storing sensitive data, such as a hard drive, in the first electronic device 120 to prevent unauthorized access to enhance the security. In some embodiments, when the first encrypted password is different from the second encrypted password, the controller 122 may first control the input/output interface 126 to flash to remind the user, and then control the first electronic device 120 to shut down.

In some embodiments, the remote device 110 updates the first dynamic password to a second dynamic password and a corresponding input password, and uses an irreversible operation to encrypt the second dynamic password to generate a third encrypted password and transmit it to the first electronic device 120. Accordingly, the first encrypted password stored in the memory 124 of the first electronic device 120 is updated to the third encrypted password. Because the encrypted password used in each verification procedure of the first electronic device 120 is a new encrypted password dynamically generated at that time, security can be further improved. In some embodiments, after the first electronic device 120 completes the startup procedure, the controller 122 may notify the remote device 110 to update the first dynamic password. In another embodiments, when the remote device 110 communicates with the first electronic device 120, the remote device 110 can dynamically generate a new dynamic password and generate an encrypted password based on the new dynamic password to transmit to the first electronic device 120. Therefore, the first electronic device 120 will always receive a new encrypted password when the first electronic device 120 communicates with the remote device 110. However, this present application is not limited to the above.

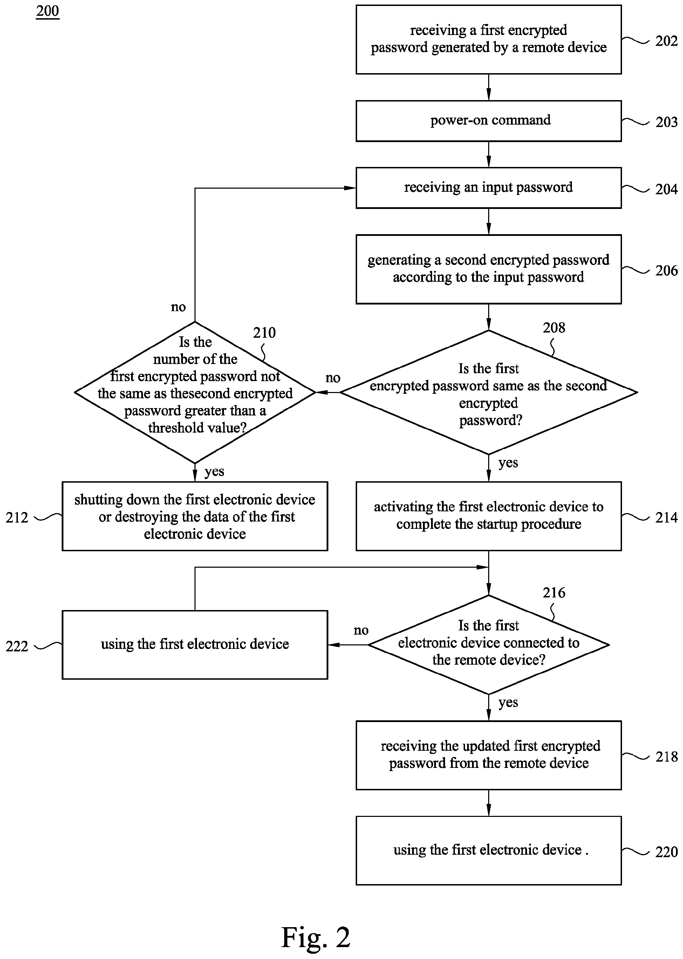

FIG. 2 is a flow chart of an authorization method for an electronic device according to a preferred embodiment of the present disclosure. Please refer to FIG. 1 and FIG. 2 simultaneously. The method of this embodiment is applied to the first electronic device 120 in FIG. 1. It should be understood that the operations of the authorization method 200 mentioned in this embodiment, except for those whose order is specifically stated, can be adjusted in order according to actual needs, and can even be executed simultaneously or partially simultaneously. Furthermore, in different embodiments, these operations may be adaptively increased, replaced, and/or omitted.

The authorization method 200 first receives a first encrypted password generated by a remote device in step 202. In some embodiments, when the first electronic device 120 is coupled to the remote device 110 via a communication protocol, the remote device 110 dynamically generates a first dynamic password and a corresponding input password, and uses an irreversible operation to encrypt the first dynamic password to generate a first encrypted password that is transmitted to the first electronic device 120. The irreversible operation is a hash algorithm.

In step 203, a power-on command is responded to. In some embodiments, the controller 122 in the first electronic device 120 responds to a power-on command to delay a startup procedure of the first electronic device 120 to make the first electronic device 120 to enter a verification process to verify whether the user has access authority to the first electronic device 120. In some embodiments, the power-on command is generated by a user pressing a power-on button of the first electronic device 120.

In step 204, an input password is received. In some embodiments, the input/output interface 126 of the first electronic device 120 may receive an input password inputted by a user. In one embodiment, the input password is same as the first dynamic password dynamically generated by the remote device 110. The user uses the second electronic device 130 different from the first electronic device 120 to receive the input password generated by the remote device 110, and inputs this input password on the input/output interface 126 of the first electronic device 120.

In step 206, a second encrypted password is generated according to the input password. In some embodiments, the controller 122 of the first electronic device 120 performs an irreversible operation on the input password inputted by the user to generate a second encrypted password. In some embodiments, the irreversible operation is a hash algorithm. The irreversible operation is same as the irreversible operation used by the remote device 110 to encrypt the first dynamic password.

In step 208, whether the first encrypted password is same as the second encrypted password is determined. In some embodiments, after the controller 122 of the first electronic device 120 generates the second encrypted password, the controller 122 can retrieve the first encrypted password generated by the remote device 110 from the memory 124 via the serial bus. The controller 122 compares the first encrypted password with the second encrypted password to determine whether the two encrypted passwords are the same.

When the first encrypted password is not the same as the second encrypted password, step 210 is performed to determine whether the number of the first encrypted password not the same as the second encrypted password is greater than a threshold value. In some embodiments, in order to prevent the first encrypted password not the same as the second encrypted password due to the user accidentally inputting an incorrect input password, the present disclosure will set a threshold value. If the number of the first encrypted password not the same as the second encrypted password is less than the threshold value, the user is allowed to input an input password again. Then, the controller 122 of the first electronic device 120 performs an irreversible operation on the input password again to generate a new second encrypted password for comparison with the first encrypted password as descripted in step 204 to step 208.

On the contrary, if the number of the first encrypted password not the same as the second encrypted password is greater than the threshold value, the first electronic device is shut down or the data of the first electronic device is destroyed in step 212. In some embodiments, if the number of the first encrypted password not the same as the second encrypted password is greater than the threshold value, which means that the user is not an authorized user, the controller 122 controls the first electronic device 120 to shut down, such as cutting off the power supply of the first electronic device 120, or to directly destroy the main storage element, such as a hard drive, of the first electronic device 120 that stores sensitive data to prevent unauthorized access.

On the other hand, when the first encrypted password is the same as the second encrypted password, in step 214, the first electronic device is activated to complete the startup procedure. In some embodiments, when the first encrypted password is the same as the second encrypted password, which means the user is an authorized user, the controller 122 controls the first electronic device 120 to complete the startup procedure. That is, the controller 122 starts the startup procedure, which is previously delayed in response to the user's power-on command, to complete the startup of the first electronic device 120.

In some embodiments, the remote device 110 dynamically updates the first dynamic password to a second dynamic password to generate an updated first encrypted password. Accordingly, when the first electronic device 120 is connected to the remote device 110, the remote device 110 may transmit the updated encrypted password to the first electronic device 120. Therefore, in step 216, it is first determined whether the first electronic device 120 is connected to the remote device 110. When the first electronic device 120 is connected to the remote device 110, in step 218, the first electronic device 120 receives the updated first encrypted password from the remote device 110. In some embodiments, the remote device 110 can dynamically generate a second dynamic password to generate an updated first encrypted password based on the second dynamic password. The updated first encrypted password is transmitted to the first electronic device 120 when the first electronic device 120 is connected to the remote device 110. The first electronic device 120 can update the first encrypted password originally stored in the memory 124 to the updated first encrypted password. Then, the user can use the first electronic device 120 normally in step 220. Accordingly, when the first electronic device 120 is powered on again, the first electronic device 120 may use the updated encrypted password in the memory 124 for performing verification procedure to verify the user. On the contrary, when the first electronic device 120 is not connected to the remote device 110, the first encrypted password originally stored in the memory 124 is not updated. In step 222, the user can use the first electronic device 120 normally.

Accordingly, in the present disclosure, when a controller installed in the electronic device receives a power-on command, the controller can temporarily delay the startup procedure of the electronic device to execute a verification procedure. In the verification procedure, an irreversible operation is performed on received verification data, such as an input password, to generate an encrypted password that is compared with another encrypted password transmitted from a remote device and stored in the memory. When the two encrypted passwords are the same, the operating system of the electronic device is started to enter the normal boot process. If the two encrypted passwords are not the same, the automatic shutdown procedure is executed or the storage device data is destroyed. Thereby, the security of the electronic device is further enhanced to prevent unauthorized access.

## Claims

1. An authorization method for an electronic device (120), **characterized**
**by** comprising:
receiving and storing a first encrypted password generated by a remote device(110) performing an irreversible operation on a first dynamic password(202);
receiving an input password(204) in response to a power-on command (203);
performing the irreversible operation on the input password to generate a second encrypted password (206);
comparing the first encrypted password and the second encrypted password (208); and
when the first encrypted password is same as the second encrypted password:
starting the electronic device to complete a startup procedure(214); and
updating the first dynamic password to a second dynamic password by the remote device (218).

2. The authorization method as claimed in claim 1, **characterized by**
further comprising:
transmitting the input password by the remote device (110) to another electronic device (130) different from the electronic device (120).

3. The authorization method as claimed in claim 1 or claim 2,
**characterized by** further comprising:
when the first encrypted password is not the same as the second encrypted password, shutting down the electronic device or destroying data stored in the electronic device (212).

4. The authorization method as claimed in any one of claim 1 to claim 3,
**characterized by** further comprising:
when the first encrypted password is not the same as the second encrypted password, counting a number of the first encrypted password not the same as the second encrypted password(210), wherein when the number is greater than a threshold value, shutting down the electronic device or destroying the data stored in the electronic device(212).

5. The authorization method as claimed in claim 4, **characterized in that**:
when the number is less than the threshold value, receiving a new input password(210), and performing the irreversible operation on the new input password to generate a new second encrypted password(204, 206).

6. The authorization method as claimed in any one of claim 1 to claim 5, **characterized by** further comprising, after starting the electronic device to complete the startup procedure(214):
determining whether the electronic device is connected to the remote device(216), and receiving and storing an updated first encrypted password generated by the remote device when the electronic device is connected to the remote device(218).

7. The authorization method as claimed in claim 6, **characterized in that** the updated first encrypted password is generated after the remote device performs the irreversible operation on the second dynamic password.

8. The authorization method as claimed in any one of claim 1 to claim 7, **characterized by** further comprising in response to the power-on command, delaying the startup procedure of the electronic device.

9. The authorization method as claimed in any one of claim 1 to claim 8, **characterized in that** the irreversible operation is a hash algorithm.

10. An authorization system for an electronic device, **characterized by**
comprising:
a remote device(110) for generating a first dynamic password, and performing an irreversible operation on the first dynamic password to generate a first encrypted password; and
a first electronic device(120), coupled to the remote device (110) to receive the first encrypted password, wherein the first electronic device further comprises:
a controller (122);
a memory(124), coupled to the controller(122), for storing the first encrypted password; and
an input-output interface(126), coupled to the controller(122), for receiving an input password in response to a power-on command,
wherein the controller (122) performs the irreversible operation on the input password to generate a second encrypted password, and compares the second encrypted password with the first encrypted password,
wherein when the first encrypted password is same as the second encrypted password, the controller(122) controls the first electronic device(120) to complete a startup procedure.

11. The authorization system as claimed in claim 10, **characterized by** further comprising:
a second electronic device(130),
wherein the remote device (110)transmits the input password to the second electronic device(130).

12. The authorization system as claimed in claim 10 or claim 11, **characterized in that** the memory (124) is an electronically-erasable rewritable read-only memory coupled to the controller via a serial bus.

13. The authorization system as claimed in any one of claim 10 to claim 12, **characterized in that** the input-output interface(126) is a keyboard.

14. The authorization system as claimed in any one of claim 10 to claim 13, **characterized in that** when the first encrypted password is not the same as the second encrypted password, the controller(122) shuts down the first electronic device (120) or destroys data stored in the first electronic device (120).

15. The authorization system as claimed in any one of claim 10 to claim 14, **characterized in that** the irreversible operation is a hash algorithm.

## Amended claims

### Amended claims in accordance with Rule 137(2) EPC.

1. An authorization method for an electronic device (120), comprising:
receiving and storing a first encrypted password generated by a remote device (110) performing an irreversible operation on a first dynamic password (202);
receiving an input password (204) in response to a power-on command (203);
performing the irreversible operation on the input password to generate a second encrypted password (206);
comparing the first encrypted password and the second encrypted password (208); and
when the first encrypted password is same as the second encrypted password:
starting the electronic device to complete a startup procedure (214); and
updating the first dynamic password to a second dynamic password by the remote device (218),
wherein the receiving of the input password (204), the performing of the irreversible operation on the input password (204) and the comparing of the first encrypted password and the second encrypted password (208) are carried out when a main storage element in the electronic device (120) is not powered on and activated.

2. The authorization method as claimed in claim 1, **characterized by**
further comprising:
transmitting the input password by the remote device (110) to another electronic device (130) different from the electronic device (120).

3. The authorization method as claimed in claim 1 or claim 2,
**characterized by** further comprising:
when the first encrypted password is not the same as the second encrypted password, shutting down the electronic device or destroying data stored in the electronic device (212).

4. The authorization method as claimed in any one of claim 1 to claim 3,
**characterized by** further comprising:
when the first encrypted password is not the same as the second encrypted password, counting a number of the first encrypted password not the same as the second encrypted password (210), wherein when the number is greater than a threshold value, shutting down the electronic device or destroying the data stored in the electronic device (212).

5. The authorization method as claimed in claim 4, **characterized in that**:
when the number is less than the threshold value, receiving a new input password (210), and performing the irreversible operation on the new input password to generate a new second encrypted password (204, 206).

6. The authorization method as claimed in any one of claim 1 to claim 5, **characterized by** further comprising, after starting the electronic device to complete the startup procedure (214):
determining whether the electronic device is connected to the remote device (216), and receiving and storing an updated first encrypted password generated by the remote device when the electronic device is connected to the remote device (218).

7. The authorization method as claimed in claim 6, **characterized in that** the updated first encrypted password is generated after the remote device performs the irreversible operation on the second dynamic password.

8. The authorization method as claimed in any one of claim 1 to claim 7, **characterized by** further comprising in response to the power-on command, delaying the startup procedure of the electronic device.

9. The authorization method as claimed in any one of claim 1 to claim 8, **characterized in that** the irreversible operation is a hash algorithm.

10. An authorization system for an electronic device, comprising:
a remote device (110) for generating a first dynamic password, and performing an irreversible operation on the first dynamic password to generate a first encrypted password; and
a first electronic device (120), coupled to the remote device (110) to receive the first encrypted password, wherein the first electronic device further comprises:
a controller (122);
a memory (124), coupled to the controller (122), for storing the first encrypted password, and
an input-output interface (126), coupled to the controller (122), for receiving an input password in response to a power-on command,
wherein the controller (122) performs the irreversible operation on the input password to generate a second encrypted password, and compares the second encrypted password with the first encrypted password,
wherein when the first encrypted password is same as the second encrypted password, the controller (122) controls the first electronic device (120) to complete a startup procedure, and
wherein the receiving of the input password, the performing of the irreversible operation on the input password and the comparing of the second encrypted password with the first encrypted password are carried out when a main storage element in the first electronic device (120) is not powered on and activated.

11. The authorization system as claimed in claim 10, **characterized by** further comprising:
a second electronic device (130),
wherein the remote device (110) transmits the input password to the second electronic device (130).

12. The authorization system as claimed in claim 10 or claim 11, **characterized in that** the memory (124) is an electronically-erasable rewritable read-only memory coupled to the controller via a serial bus.

13. The authorization system as claimed in any one of claim 10 to claim 12, **characterized in that** the input-output interface (126) is a keyboard.

14. The authorization system as claimed in any one of claim 10 to claim 13, **characterized in that** when the first encrypted password is not the same as the second encrypted password, the controller (122) shuts down the first electronic device (120) or destroys data stored in the first electronic device (120).

15. The authorization system as claimed in any one of claim 10 to claim 14, **characterized in that** the irreversible operation is a hash algorithm.
